(19) Europäisches Patentamt
European Patent Office
Office européen des brevets

(11) Veröffentlichungsnummer: **0 014 451**
**B1**

(12) # EUROPÄISCHE PATENTSCHRIFT

(45) Veröffentlichungstag der Patentschrift: **22.12.82**

(51) Int. Cl.³: **D 06 P 1/18**, C 09 B 29/36, C 09 B 31/14, C 09 B 43/00

(21) Anmeldenummer: **80100538.0**

(22) Anmeldetag: **04.02.80**

(54) **Verfahren zum Färben und Bedrucken von hydrophoben, synthetischen, organischen Fasermaterialien mit wasserunlöslichen Azofarbstoffen.**

(30) Priorität: **08.02.79 DE 2904752**

(43) Veröffentlichungstag der Anmeldung: **20.08.80 Patentblatt 80/17**

(45) Bekanntmachung des Hinweises auf die Patenterteilung: **22.12.82 Patentblatt 82/51**

(84) Benannte Vertragsstaaten: **DE FR GB IT**

(56) Entgegenhaltungen:

**GB-A-1 414 503**
**US-A-3 134 764**
**CHEMICAL ABSTRACTS, Band 87, Nr. 20, 14. November 1977, Seite 54, Nr. 153281p Columbus, Ohio, USA A.M. KHALIL et al.: «New azo disperse dyes with an 5-oxazolone ring for dyeing polyester fibers»**

**Die Akte enthält technische Angaben, die nach dem Eingang der Anmeldung eingereicht wurden und die nicht in dieser Patentschrift enthalten sind.**

(73) Patentinhaber: **HOECHST AKTIENGESELLSCHAFT, Postfach 80 03 20, D-6230 Frankfurt/Main 80 (DE)**

(72) Erfinder: **Hoyer, Ernst, Dr., Eptingweg 3, D-6230 Frankfurt am Main 80 (DE)**
Erfinder: **Steckelberg, Willi, Dr., Quidnick Street 129, Coventry Rhode Island 02816 (US)**
Erfinder: **Deucker, Walter, Dr., Am Rehsteig 4, D-6232 Bad Soden am Taunus (DE)**
Erfinder: **Schickfluss, Rudolf, Dr., Luisenstrasse 37, D-6233 Kelkheim (Taunus) (DE)**

**EP 0 014 451 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

# Verfahren zum Färben und Bedrucken von hydrophoben, synthetischen, organischen Fasermaterialien mit wasserunlöslichen Azofarbstoffen

Die vorliegende Erfindung betrifft ein neues Verfahren zum Färben oder Bedrucken von hydrophoben, synthetischen, organischen Fasermaterialien, dadurch gekennzeichnet, dass wasserunlösliche Azofarbstoffe der allgemeinen Formel (I)

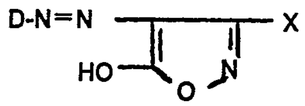 (I)

verwendet werden, worin X eine Alkylgruppe mit 1 bis 4 Kohlenstoffatomen, insbesondere die Methylgruppe, oder die Phenylgruppe bedeutet, welche durch Alkylgruppen mit 1 bis 4 Kohlenstoffatomen, Alkoxygruppen mit 1 bis 4 Kohlenstoffatomen, Fluor-, Chlor- und/oder Bromatome und/oder Nitrogruppen substituiert sein kann, und D für einer Diphenyl-, Naphthyl- oder Phenylrest steht, welcher als nicht wasserlöslich machende Substituenten Chlor- und/oder Bromatome, Alkyl-, Alkoxy-, Aryl-, Aryloxy-, Nitro-, Cyan-, Trifluormethyl-, Alkylcarbonyl-, Alkylsulfonyl-, Alkoxycarbonyl, Arylcarbonyl-, Arylsulfonyl-, Alkylcarbonylamino-, Arylcarbonylamino-, Arylazo-, Sulfamoyl- und/oder Carbamoylreste enthalten kann, wobei unter Alkyl- und Alkoxygruppen solche mit 1-4 C-Atomen und unter Arylgruppen die Phenylgruppe, welche durch Halogenatome, Alkyl $C_1$-$C_4$- und/oder Alkoxy $C_1$-$C_4$-gruppen substituiert sein kann, zu verstehen sind.

Besonders wertvolle Farbstoffe im Rahmen der Formel (I) sind solche der allgemeinen Formel (II)

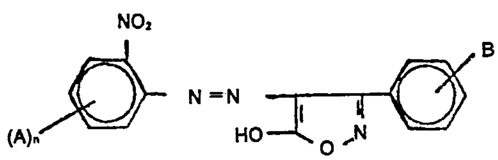 (II)

in welcher A ein Wasserstoffatom, eine Methyl-, Methoxy-, Äthoxy-, β-Hydroxyäthoxygruppe oder ein Chlor- oder Bromatom, eine Trifluormethyl- oder Alkoxy-$C_1$-$C_4$-carbonylgruppe bedeutet, und B ein Wasserstoff- oder Halogenatom, vorzugsweise ein Chlor- oder Bromatom, oder eine Nitro-, Methyl- oder Methoxygruppe bedeutet und n für die Zahl 0, 1 oder 2 steht.

Die erfindungsgemäss zur Anwendung kommenden Azofarbstoffe der allegemeinen Formel (I) können in an sich bekannter Weise hergestellt werden, indem man diazotierte Amine der allgemeinen Formel (III)

$D\text{-}NH_2$ (III)

in welcher D die vorstehend genannte Bedeutung hat, mit Kupplungskomponenten der allgemeinen Formel (IV)

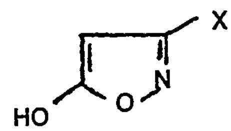

in welcher X die vorstehend genannte Bedeutung hat, vereinigt.

Die zur Anwendung kommenden Azofarbstoffe der allgemeinen Formel (I) können auch hergestellt werden, indem man diazotierte Amine der allgemeinen Formel

$D\text{-}NH_2$ (III)

in welcher D die weiter oben genannte Bedeutung hat, mit Verbindungen der allgemeinen Formel (V)

$X\text{-}CO\text{-}CH_2\text{-}COOR$ (V)

in welcher X die vorstehend genannte Bedeutung hat und R für einen Alkylrest mit 1 bis 4 Kohlenstoffatomen steht, kuppelt unter Erhalt von Azoverbindungen der allgemeinen Formel (VI)

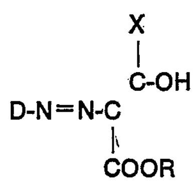 (VI)

in welcher D, X und R die vorstehenden Bedeutungen haben. Die so erhaltenen Verbindungen der genannten allgemeinen Formel (VI) können dann in bekannter Weise mit Hydroxylamin zu den Azofarbstoffen der genannten allgemeinen Formel (I) umgesetzt werden.

Als hydrophobe, synthetische, organische Fasermaterialien kommen beispielsweise solche aus Celluloseestern, Polyestern, Polyurethanen, Polyolefinen oder Polyamiden in Betracht.

Bevorzugt sind von den genannten Fasermaterialien für das vorliegende Färbe- und Druckverfahren solche aus Celluloseestern, wie Cellulose-di-, -2½- und -triacetat, Polyamiden, wie Polycaprolactam oder Polyhexamethylendiaminoadipat, insbesondere jedoch solche aus Polyestern, wie Polyäthylenglykolterephthalat. Die synthetischen Fasermaterialien können dem erfindungsgemässen Färbe- und Druckverfahren ausser in reiner Form auch in Form von Mischungen untereinander oder mit natürlichen Fasermaterialien, wie Cellulosefasern oder Wolle, unterworfen werden.

Die Fasermaterialien können dabei in den verschiedensten Verarbeitungsstadien vorliegen, beispielsweise als Faden, Flocke, Kammzug, als Stückware, wie Gewebe, Gewirke oder Vlies, oder als konfektionierte Ware.

Bei der erfindungsgemässen Anwendung der Azofarbstoffe zum Färben oder Bedrucken der genannten Fasermaterialien werden die Farbstoffe, vorzugsweise in zubereiteter Form eingesetzt, wie zum Beispiel in wässriger Dispersion oder Lösung in organischen Lösungsmitteln oder in Emulsion oder Dispersion, die neben einem Lösungsmittel oder Lösungsmittelgemisch noch Wasser enthalten können.

Zur Herstellung von Dispersionen werden die Farbstoffe in Gegenwart von Dispergiermitteln und gegebenenfalls weiteren Mahlhilfsmitteln feinzerteilt. Anschliessend eignen sich insbesondere wässrige Dispersionen zur Herstellung trockener Farbstoffpräparate, die dann neben dem betreffenden Farbstoff die eingesetzten Dispergiermittel und gegebenenfalls eingesetzten Mahlhilfsmittel enthalten. Ein wesentliches Kennzeichen solcher Farbstoffpräparate ist, dass sie beim Eintragen in Wasser ohne Einsatz besonderer Feinverteilungsvorrichtungen wieder eine Farbstoffdispersion mit einem Feinverteilungsgrad, wie er vor der Trocknung vorgelegen hat, ergeben. Die Trocknung wässriger Dispersionen kann in verschiedenartiger Weise erfolgen, wie durch Verdunstung an der Raumluft in Normaldruck- oder Vakuumtrocknungsanlagen oder durch Sprühtrocknung in dafür geeigneten Anlagen.

Man färbt nach an sich bekannten Verfahren, wobei sich die Färbebedingungen weitgehend nach der Art der synthetischen Fasermaterialien und deren Verarbeitungszustand richten.

Polyesterfasern beispielsweise färbt man vorzugsweise aus wässriger Dispersion bei Temperaturen über 100°C unter Druck. Die Färbungen können aber auch beim Siedepunkt des Wassers in Gegenwart von Farbüberträgern, wie beispielsweise Phenylphenolen, Polychlorbenzolverbindungen, Methylnaphthalin oder ähnlichen Hilfsmitteln, durchgeführt werden. Ferner erhält man kräftige Färbungen, wenn man Gewebe oder Gewirke aus Polyesterfasern mit Suspensionen eines der Azofarbstoffe oder einem Gemisch dieser Farbstoffe imprägniert und sie dann einer kurzzeitigen Hitzeeinwirkung, beispielsweise bei Temperaturen von 180 bis 210°C, unterwirft.

Cellulose-2$^1/_2$-acetat färbt man vorzugsweise bei Temperaturen von 65 bis 85°C und Cellulosetriacetat bei Temperaturen bis etwa 115°C. Nahe Kochtemperatur im Bereich zwischen 90 und 95°C werden Fasermaterialien aus Polyamid gefärbt. Beim Färben von Cellulose-2$^1/_2$-acetat- oder Polyamidfasern ist der Einsatz von Farbüberträgern nicht erforderlich.

Der günstigste pH-Bereich für die Färbebäder, aus denen die genannten Substrate gefärbt werden, liegt zwischen 2 und 9, insbesondere zwischen 4 und 8.

Für die Einstellung des gewünschten pH-Wertes bedient man sich beispielsweise wässriger Lösungen von Ammoniumsulfat, Natrium- oder Ammonium-o-phosphat, Natriumacetat, Schwefelsäure oder Essigsäure.

Das gefärbte Material wird zur Verbesserung der Reibechtheit zweckmässig von oberflächlich anhaftendem Farbstoff befreit, beispielsweise durch sorgfältiges Spülen, insbesondere aber durch übliche Nachbehandlungsverfahren, wie Emulgatorwäsche oder reduktive Nachbehandlung.

Beim Färben der aufgeführten Fasermaterialien aus organischen Lösemitteln lässt man den Azofarbstoff entweder nach dem diskontinuierlich arbeitenden Ausziehverfahren aus der Lösung auf das Substrat vorzugsweise bei 70 bis 130°C aufziehen oder man färbt nach dem kontinuierlich arbeitenden Thermosolverfahren, wobei man das beispielsweise in Form von Gewebe vorliegende Substrat mit einer organischen Farbstofflösung imprägniert, anschliessend trocknet und einer kurzzeitigen Hitzeeinwirkung, beispielsweise zwischen 180 und 210°C, unterwirft.

Als Lösemittel beim Ausziehverfahren seien mit Wasser nicht mischbare Lösemittel mit Siedepunkten zwischen 40 und 170°C genannt, wie beispielsweise die aliphatischen Halogenkohlenwasserstoffe, wie Methylenchlorid, Trichloräthan, Trichloräthylen, Perchloräthylen.

Für das kontinuierlich arbeitende Färbeverfahren kommen insbesondere auch mit Wasser mischbare Lösemittel, wie beispielsweise Alkohole, wie Alkanole mit 1 bis 4 C-Atomen, oder Dimethylformamid in Betracht.

Die Lösemittel können auch als Mischungen vorliegen und weitere, in den Lösemitteln lösliche Hilfsmittel, wie beispielsweise Oxalkylierungsprodukte von Fettalkoholen, Alkylphenolen und Fettsäuren, enthalten.

Die Herstellung von Drucken auf den genannte Fasermaterialien bei der erfindungsgemässen Anwendung der Azofarbstoffe (I) erfolgt ebenfalls nach an sich bekannten Verfahren. Auf Polyesterfasermaterial beispielsweise können die Farbstoffe in wasserhaltigen Zubereitungen angewandt werden, die neben dem feinverteilten Farbstoff geeignete Verdickungsmittel und Fixierbeschleuniger enthalten.

Die Fixierung erfolgt beispielsweise nach dem Drucken und Trocknen durch Dämpfen bei Atmosphärendruck während 30 bis 60 Minuten oder unter erhöhtem Druck bis zu 2 atü während 10 bis 30 Minuten. Ebenso kann die Fixierung durch Einwirkung von Heissdampf oder Heissluft von 150 bis 220°C während 30 bis 90 Sekunden bewirkt werden.

Besonders geeignet sind die Azofarbstoffe (I) zur Herstellung von Drucken nach Umdruckverfahren, den sogenannten Transferdruckverfahren, wobei nicht nur die genannten synthetischen Fasermaterialien sowie deren Mischungen untereinander oder mit natürlichen Fasermaterialien, sondern gegebenenfalls auch entsprechend ausgerüstete natürliche Fasern, wie Cellulosefasern, die beispielsweise vor dem Druck mit geeigneten Kunstharzen behandelt wurden, bedruckt werden können. Dazu werden

Drucktinten, die neben dem feinverteilten Farbstoff Bindemittel, Wasser und/oder ein organisches Lösemittel enthalten, zunächst auf einen inerten Träger, beispielsweise auf bei den angewandten Temperaturen beständige Kunststoff- oder Aluminiumfolien, vorzugsweise jedoch auf Papier, aufgebracht und getrocknet. Dann wird die behandelte Seite des Trägers mit der Oberfläche des Fasermaterials, beispielsweise Polyestergewege, -vlies oder -gewirk in Kontakt gebracht, hierauf Träger und Fasermaterial, gegebenenfalls unter mechanischem Druck, einer Wärmeeinwirkung von 150 bis 230°C, vorzugsweise von 170 bis 210°C, während 2 bis 60 Sekunden unterworfen und das gefärbte Fasermaterial darauf vom Träger abgetrennt.

Bei der erfindungsgemässen Anwendung der Azofarbstoffe (I), deren an sich ausgezeichnetes Ziehvermögen sich durch Mischen von zwei oder mehr der genannten Farbstoffe noch verbessern lässt, lassen sich auf den genannten Fasermaterialien lebhafte und klare grünstichig gelbe bis gelbstichig orange Färbungen erzielen, die sehr gut nass-, wasch-, abgas- und lichtecht sind.

Die nachfolgenden Beispiele sollen die Erfindung veranschaulichen.

Teile bedeuten darin Gewichtsteile. Volumenteile sind als solche ausdrücklich benannt und verhalten sich zum Liter wie das Teil zum Kilogramm.

Beispiel 1

In 2000 Teilen eines Färbebades, das 1 Teil des Farbstoffs der Formel

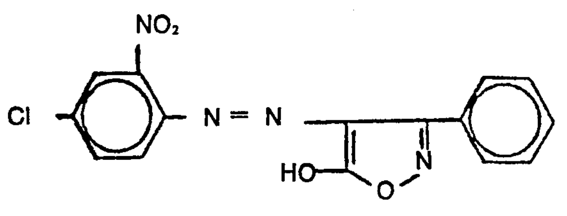

in feindisperser Form sowie 12 Teile eines handelsüblichen Färbebeschleunigers auf Basis o-Phenylphenol und 12 Teile Ammonium-o-phosphat enthält, färbt man 100 Teile Garn aus Polyäthylenglykolterephthalat 1,5 Stunden lang bei 95 bis 98°C. Das gefärbte Material wird anschliessend in einem anderen Bad, das pro 100 Teile 2 Teile Natriumdithionit und 2 Teile 33-gewichtsprozentige Natronlauge enthält, bei 80°C 20 Minuten lang reduktiv nachbehandelt, dann sorgfältig gespült und getrocknet.

Bei sehr guter Erschöpfung des Färbebades erhält man ein in einem klaren, grünstichigen Gelb gefärbtes Polyestergarn. Die Färbung zeichnet sich durch hohe Echtheiten aus, unter denen die sehr gute Lichtechtheit besonders zu erwähnen ist.

Der vorstehend genannte Farbstoff kann wie folgt hergestellt werden:

17,2 Teile 4-Chlor-2-nitro-anilin werden in 46,5 Teilen etwa 30-gewichtsprozentiger Salzsäure angerührt. Unter Zugabe von 50 g Eis und 50 g Wasser lässt man 17,5 g 40-gewichtsprozentige Natriumnitritlösung unter gleichzeitiger Aussenkühlung zutropfen. Zur Vervollständigung der Diazotierung wird 2 Stunden bei 0-5°C nachgerührt, anschliessend wird etwa vorhandenes überschüssiges Nitrit durch Zugabe von Amidosulfonsäure zerstört. Die Lösung des Diazoniumsalzes wird mit Kieselgel geklärt.

16,1 Teile 3-Phenyl-isoxazolon-(5) werden in 50 Volumenteilen 2n-Natronlauge gelöst. Der Ansatz wird sodann mit 250 Volumenteilen Eiswasser verdünnt. Dann tropft man innerhalb von 20 Minuten die wie vorstehend beschrieben hergestellte Diazolösung hinzu, hält den Ansatz durch Zugabe von 150 Teilen Eis bei einer Temperatur von 0-5°C und den pH-Wert bei 8-11 durch Zugabe von Natronlauge. Nach halbstündigem Nachrühren wird der Ansatz durch Zugabe von Eisessig auf einen pH-Wert von 6,5 gestellt. Die Farbstoffsuspension wird noch 2 Stunden nachgerührt, dann abgesaugt und mit Wasser neutral und salzfrei gewaschen.

Beispiel 2

15 Teile des Farbstoffs der Formel

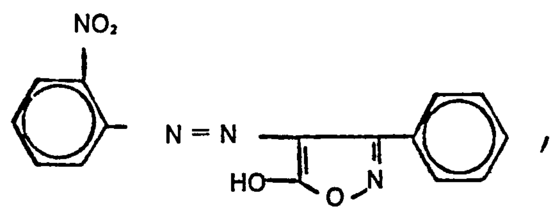

15 Teile eines handelsüblichen Kondensationsproduktes aus Formaldehyd und einer Naphthalinsulfonsäure, das ein ionogenes Dispergierhilfsmittel darstellt, sowie 120 Teile Wasser werden in einer Kugelmühle zu einer feinen Dispersion vermahlen und anschliessend mit Wasser auf 2000 Teile aufgefüllt.

Mit dieser Färbeflotte wird Polyestergewebe auf dem Foulard in üblicher Weise imprägniert. Darauf wird das Gewebe bis auf eine Gewichtszunahme von 70% abgequetscht, in einem Trockenapparat bei etwa 100°C getrocknet und dann etwa 60 Sekunden mit Heissluft von 210°C behandelt. Das gefärbte Material wird mit Wasser gespült, auf die im Beispiel 1 beschriebene Weise reduktiv nachbehandelt, abermals gespült und getrocknet.

Es werden so kräftige Färbungen in grünstichigem Gelb hoher Echtheitseigenschaften erzielt. Der verwendete Farbstoff wird in der in Beispiel 1 beschriebenen Art hergestellt.

Beispiel 3

0,2 Teile des Farbstoffs der Formel

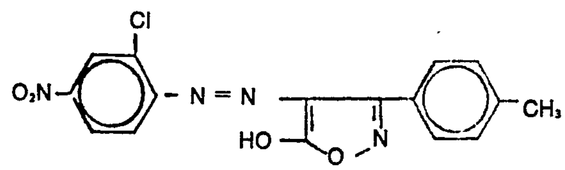

werden in üblicher Weise in 200 Teilen Wasser feindispergiert. Nachdem mit geringen Mengen einer wässrigen Schwefelsäure ein pH-Wert von 4-5 eingestellt wurde, werden in dem so bereiteten Färbebad 20 Teile Polyestergewebe bei geschlossener Apparatur 1 Stunde bei 130°C gefärbt. Das gefärbte Material wird anschliessend wie im Beispiel 1 beschrieben nachbehandelt und fertiggestellt. Die erzielte gelbe Färbung zeichnet sich durch hohe Echtheiten aus.

Beispiel 4

0,08 Teile des Farbstoffs der Formel

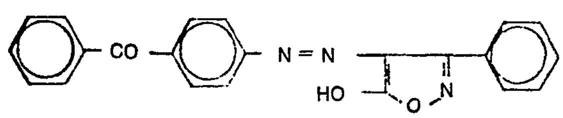

werden in 8 Teilen Dimethylformamid gelöst. Diese Lösung giesst man unter Rühren in 400 Teile Wasser, denen vorher 1 Teil eines handelsüblichen nichtionogenen Färbereihilfsmittels mit Dispergier- und Egalisierwirkung auf Basis eines hochoxäthylierten Pflanzenfettes zugesetzt werden. In das so bereitete Färbebad, dessen pH-Wert mit Ammoniumsulfat und Essigsäure auf 5 eingestellt wurde, geht man bei 40°C mit 8 Teilen eines Polyamidgewebes auf Basis Caprolactam ein. Anschliessend wird das Bad innerhalb von 45 Minuten auf 90 bis 95°C erhitzt und 1 Stunde bei dieser Temperatur gehalten. Das auf diese Weise gefärbte Gewebe wird mit Wasser gespült, in einem anderen Bad, das auf 1000 Teilen Wasser 1 Teil eines handelsüblichen Netz-, Wasch- und Dispergiermittels auf Basis eines oxäthylierten Alkylphenols enthält, während 10 Minuten bei 50°C nachbehandelt, erneut mit Wasser gewaschen und getrocknet.

Bei guter Erschöpfung des Färbebades erzielt man so auf dem genannten Polyamidgewebe eine rotstichig gelbe Anfärbung hoher Echtheiten, wobei die hohe Lichtechtheit besonders überrascht.

Beispiel 5

Mit einer Lösung von 10 Teilen des Farbstoffs der Formel

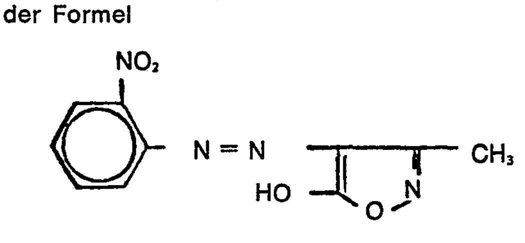

in 1000 Volumenteilen Perchloräthylen wird Polyestergewebe auf dem Foulard in üblicher Weise imprägniert, auf eine Gewichtszunahme von etwa 90% abgequetscht und in einem Trockenapparat bei etwa 100°C getrocknet. Darauf wird 60 Sekunden lang mit 210°C heisser Luft fixiert. Das gefärbte Gewebe wird anschliessend bei Raumtemperatur mit Perchloräthylen gespült und dann getrocknet. Die auf dem Polyestergewebe erzielte grünstichig gelbe Färbung zeichnet sich durch hohe Echtheiten aus.

Der vorstehend genannte Farbstoff kann wie folgt hergestellt werden: 13,8 Teile 2-Nitro-anilin werden in 600 Volumenteilen verdünnter Salzsäure heiss gelöst. Die heisse Lösung wird auf eine Mischung von 17,5 Teilen Natriumnitrit-Lösung 40%ig und 250 Teilen Eis gegeben. Zur Vervollständigung der Diazotierung wird 1 Stunde bei 0-5°C nachgerührt. Dann wird mit Amidosulfonsäure der Nitritüberschuss zerstört und die Lösung des Diazoniumsalzes mit Kieselgur geklärt. 13 Teile Acetessigsäureäthylester werden in 200 Volumenteilen Eiswasser suspendiert; durch Zugabe von 2n-Natronlauge wird dann ein pH-Wert von 7,5 eingestellt. Zu der so erhaltenen Lösung wird dann die obige Diazolösung unter Zugabe von Eis bei 0-5°C zugetropft. Der pH-Wert von 7,5 wird durch Zugabe von weiterer Natronlauge gehalten. Das erhaltene Produkt wird abgesaugt und getrocknet.

14 Teile des oben erhaltenen Produkts werden in 80 Volumenteilen Äthanol angerührt, dann mit 10 Teilen Hydroxylaminhydrochlorid und 5 Teilen Natriumacetat wasserfrei versetzt und 3 Stunden zum Sieden erhitzt. Anschliessend lässt man abkühlen, versetzt mit 80 Teilen Wasser und saugt den Isoxazolon-Farbstoff ab.

Beispiel 6

Ein Polyestergewebe wird mit einer Druckpaste, die auf 1000 Teile ausser dem handelsüblichen Verdickungsmittel Alginat und weiteren üblichen Zusätzen 200 Teile einer 10-gewichtsprozentigen, wässrigen Dispersion des Farbstoffs der Formel

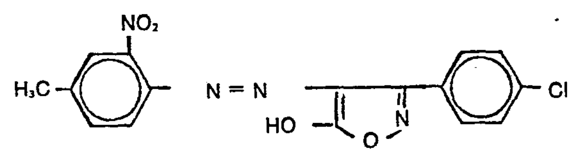

enthält, bedruckt und getrocknet. Anschliessend wird mit Heissluft bei 200°C während 60 Sekunden fixiert. Das bedruckte Gewebe wird dann reduktiv nachbehandelt, mit Wasser gespült und getrocknet.

Nach einem so durchgeführten Verfahren werden klare, gelbe Drucke guter Echtheiten erzielt.

Beispiel 7

50 Teile des Farbstoffs der Formel

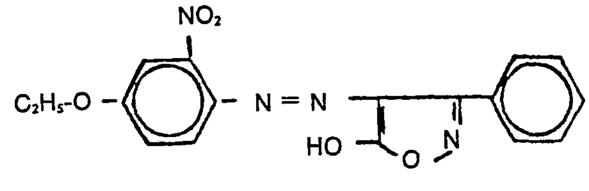

5 Teile eines Formaldehyd/Naphthalinsulfonsäure-Kondensationsproduktes und 70 Teile Wasser werden in einer Kugelmühle bis zur ausreichenden Feinverteilung des Farbstoffs vermahlen.

100 Teile dieser 40-gewichtsprozentigen Farbstoffpräparation werden in 960 Teile eines handelsüblichen Firnisses eingerührt.

Die so erhaltene Drucktinte wird dann mit einer Tiefdruckmaschine auf Papier gebracht. Verpresst man dieses Papier während 30 Sekunden bei 200°C mit einem Gewebe aus Polyesterfasern, so erhält man auf dem Polyestermaterial einen farbkräftigen Druck in rotstichigem Gelb mit sehr guten Echtheitseigenschaften.

In der folgenden Tabelle sind weitere verfahrensgemäss zur Anwendung gelangende Farbstoffe der allgemeinen Formel I aufgeführt:

TABELLE

| Beispiel | Farbstoff | Farbton auf Polyesterfasern |
|---|---|---|
| 8 | 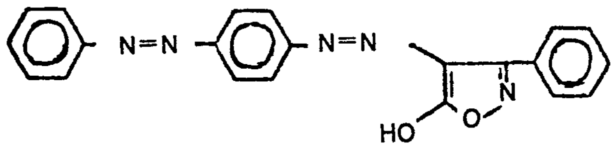 | rotstichig gelb |
| 9 | 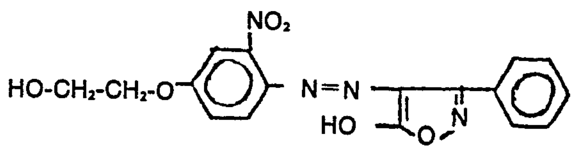 | rotstichig gelb |
| 10 | 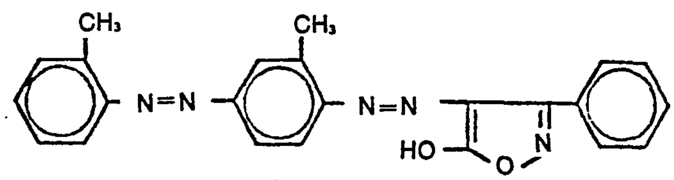 | rotstichig gelb |
| 11 | 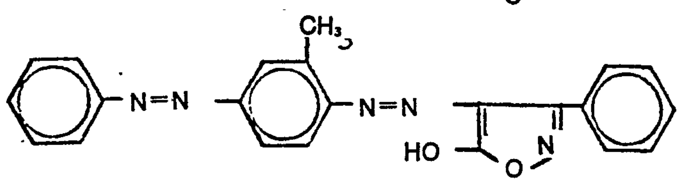 | rotstichig gelb |
| 12 | 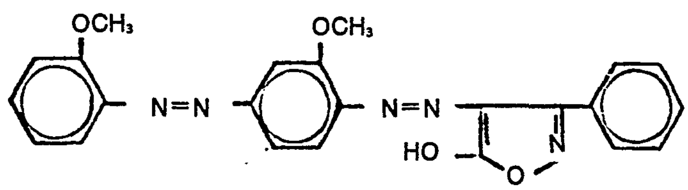 | rotstichig gelb |
| 13 | 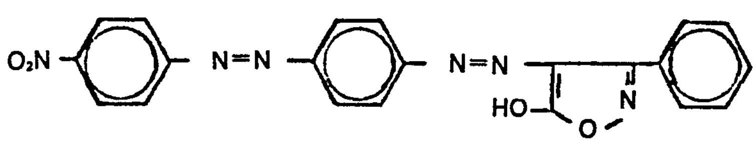 | rotstichig gelb |
| 14 | 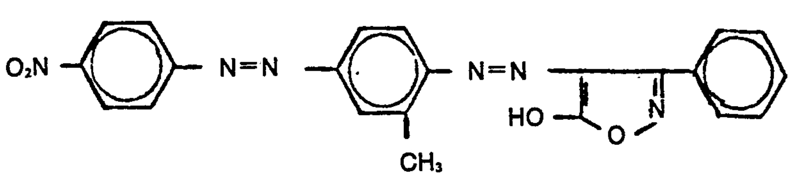 | gelbstichig braun |

TABELLE (Fortsetzung)

| Beispiel | Farbstoff | Farbton auf Polyester-fasern |
|---|---|---|
| 15 | 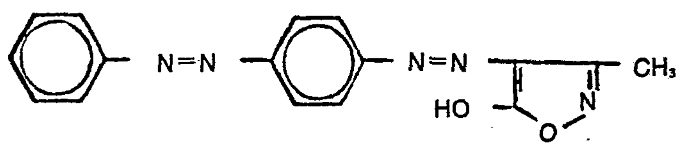 | gelb |
| 16 | 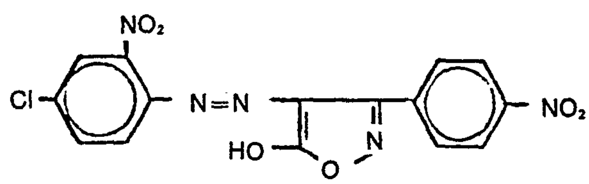 | rotstichig gelb |
| 17 | 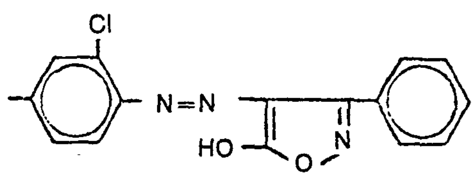 | grünstichig gelb |
| 18 | 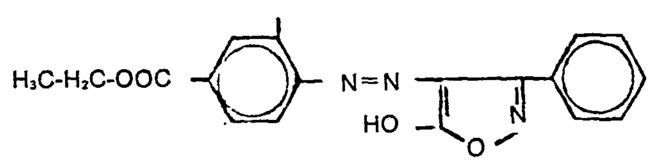 | grünstichig gelb |
| 19 | 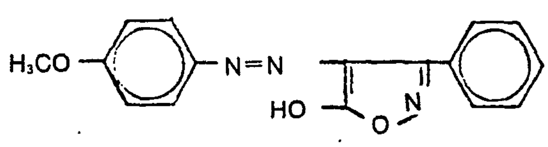 | rotstichig gelb |
| 20 | 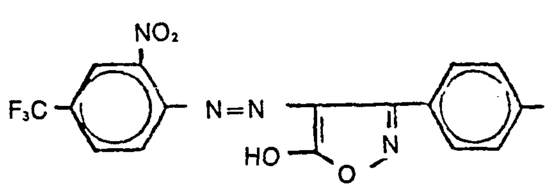 | rotstichig gelb |
| 21 | 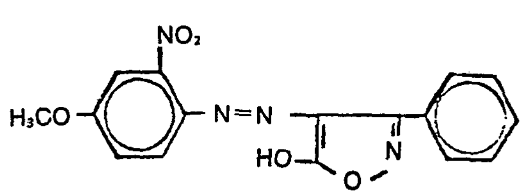 | rotstichig gelb |
| 22 | 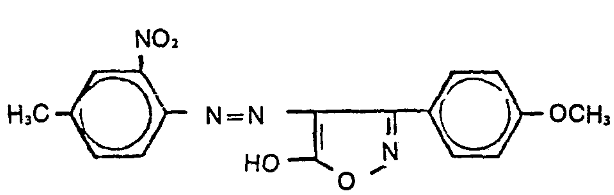 | gelb |

TABELLE (Fortsetzung)

| Beispiel | Farbstoff | Farbton auf Polyester-fasern |
|---|---|---|
| 23 | 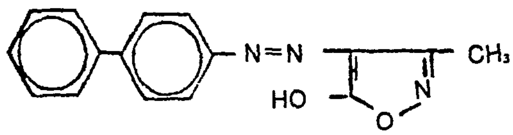 | gelb |
| 24 | 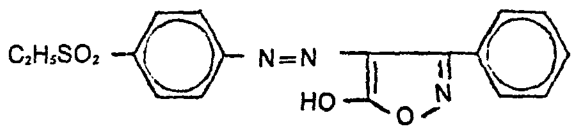 | grünstichig gelb |
| 25 | 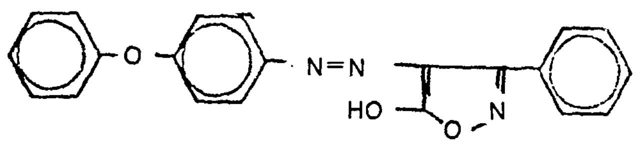 | gelb |
| 26 | 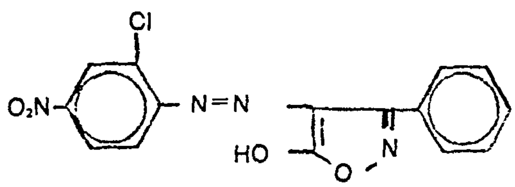 | gelb |
| 27 | 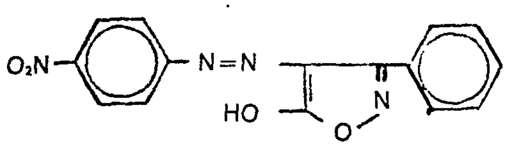 | gelb |
| 28 | 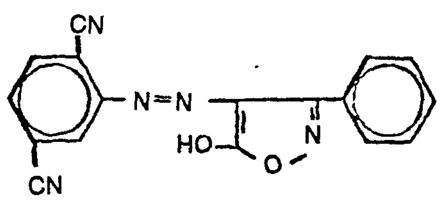 | gelb |
| 29 | 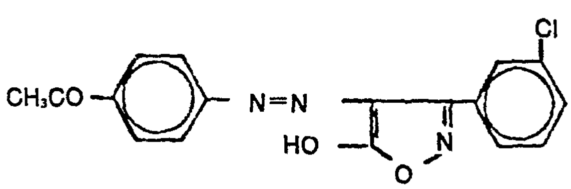 | grünstichig gelb |
| 30 | 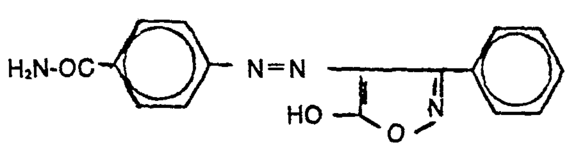 | grünstichig gelb |

TABELLE (Fortsetzung)

| Beispiel | Farbstoff | Farbton auf Polyester-fasern |
|---|---|---|
| 31 | 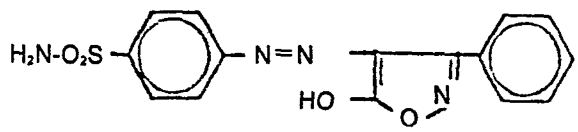 | grünstichig gelb |
| 32 | 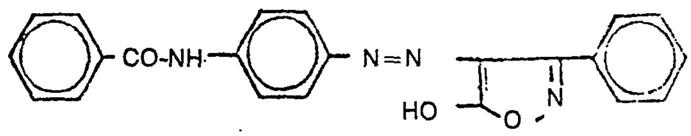 | gelb |
| 33 | 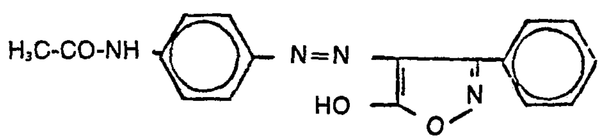 | gelb |
| 34 | 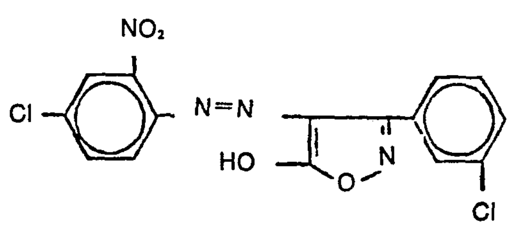 | gelb |
| 35 | 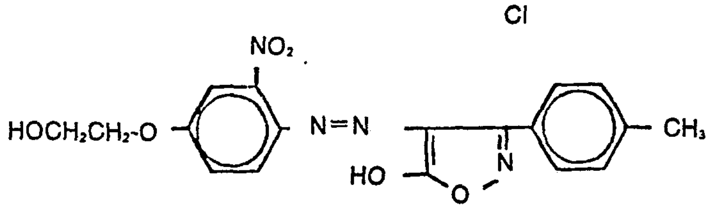 | rotstichig gelb |
| 36 | 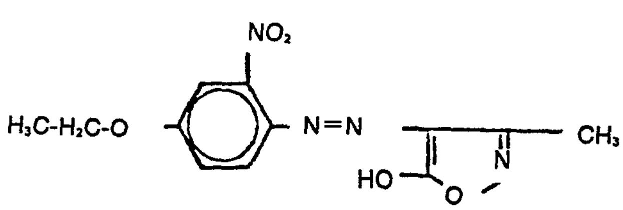 | gelb |
| 37 | 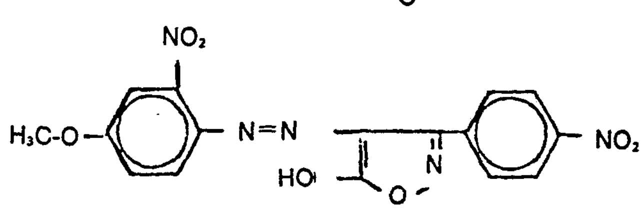 | rotstichig gelb |
| 38 | 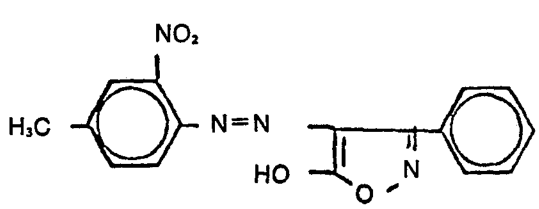 | gelb |

TABELLE (Fortsetzung)

| Beispiel | Farbstoff | Farbton auf Polyester-fasern |
|---|---|---|
| 39 | 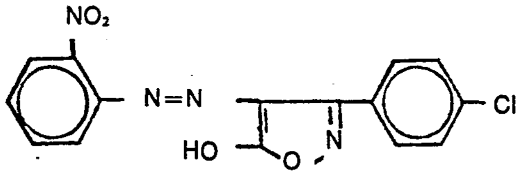 | gelb |
| 40 | 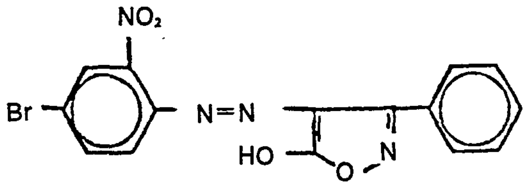 | gelb |
| 41 | 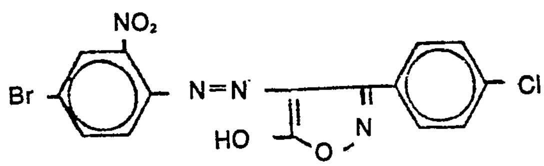 | gelb |
| 42 | 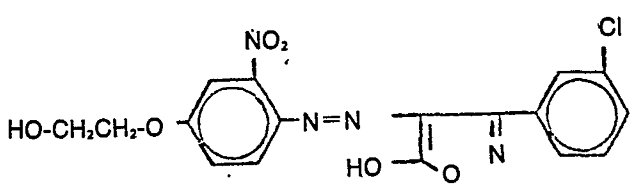 | rotstichig gelb |

**Patentansprüche**

1. Verfahren zum Färben oder Bedrucken von hydrophoben, synthetischen, organischen Fasermaterialien, dadurch gekennzeichnet, dass wasserunlösliche Azofarbstoffe der allgemeinen Formel

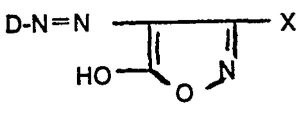

(I)

verwendet werden, worin X eine Alkylgruppe mit 1 bis 4 Kohlenstoffatomen oder die Phenylgruppe bedeutet, welche durch Alkylgruppen mit 1 bis 4 Kohlenstoffatomen, Alkoxygruppen mit 1 bis 4 Kohlenstoffatomen, Fluor-, Chlor- und/oder Bromatome und/oder Nitrogruppen substituiert sein kann, und D für einen Diphenyl-, Naphthyl- oder Phenylrest steht, welcher als nichtwasserlöslichmachende Substituenten Chlor und/oder Bromatome, Alkyl-, Alkoxy-, Aryl-, Aryloxy-, Nitro-, Cyan-, Trifluormethyl-, Alkylcarbonyl-, Alkylsulfonyl-, Alkoxycarbonyl-, Arylcarbonyl-, Arylsulfonyl-, Alkylcarbonylamino-, Arylcarbonylamino-, Arylazo-, Sulfamoyl- und/oder Carbamoylreste enthalten kann, wobei unter Alkyl- und Alkoxygruppen solche mit 1 bis 4 C-Atomen, und unter Arylgruppen die Phenylgruppe, welche durch Halogenatome, Alkyl $C_1$-$C_4$ und/oder Alkoxy $C_1$-$C_4$ gruppen substituiert sein kann, zu verstehen sind.

2. Verfahren nach Anspruch 1, dadurch gekennzeichnet, dass wasserunlösliche Azofarbstoffe der allgemeinen Formel (II)

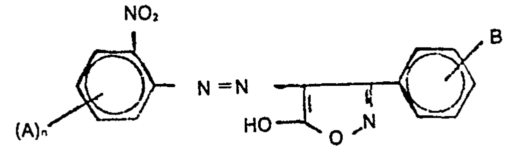

(II)

verwendet werden, worin A ein Wasserstoffatom, eine Methyl-, Methoxy-, Äthoxy-, β-Hydroxyäthoxygruppe oder ein Chlor- oder Bromatom, eine Trifluormethyl- oder Alkoxy $C_1$-$C_4$ carbonylgruppe bedeutet, und B ein Wasserstoff- oder Halogenatom oder eine Nitro-, Methyl- oder Methoxygruppe bedeutet und n für die Zahl 0, 1 oder 2 steht.

## Claims:

1. Process for the dyeing or printing of hydrophobic synthetic organic fiber materials, which comprises using water-insoluble azo dyestuffs of the formula (I)

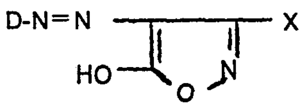

(I)

in which X is alkyl of from 1 to 4 carbon atoms or the phenyl group which may be substituted by alkyl of from 1 to 4 carbon atoms, alkoxy of from 1 to 4 carbon atoms, fluorine, chlorine and/or bromine atoms and/or nitro groups, and D stands for a diphenyl, naphthyl or phenyl radical which may contain as non-hydrosolubilizing substituents chlorine and/or bromine atoms, alkyl, alkoxy, aryl, aryloxy, nitro, cyano, trifluoromethyl, alkylcarbonyl, alkylsulfonyl, alkoxycarbonl, arylcarbonyl, arylsulfonyl, alkylcarbonylamino, arylcarbonylamino, arylazo, sulfamoyl and/or carbamoyl radicals, the alkyl and alkoxy groups preferably being in each case those with from 1 to 4 carbon atoms, and the aryl groups being phenyl radicals which may be substituted by halogen atoms, $C_1$-$C_4$-alkyl and/or $C_1$-$C_4$-alkoxy groups.

2. Process as claimed in claim 1, which comprises using water-insoluble azo-dyestuffs of the formula (II)

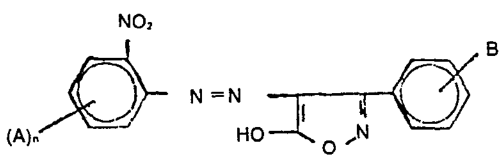

(II)

in which A is hydrogen, methyl, methoxy, ethoxy, β-hydroxy-ethoxy or chlorine or bromine, trifluoromethyl or alkoxy-$C_1$-$C_4$-carbonyl, and B is hydrogen or halogen or nitro, methyl or methoxy, and n stands for the integer 0, 1 or 2.

## Revendications

1. Procédé pour teindre ou imprimer des matières fibreuses organiques, synthétiques, hydrophobes, caractérisé en ce qu'on utilise des colorants azoïques insolubles dans l'eau de formule générale

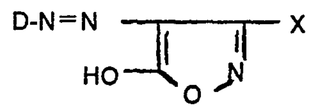

où X signifie un groupe alkyle à 1 à 4 atomes de carbone ou le groupe phényle, qui peut être substitué par des groupes alkyle à 1 à 4 atomes de carbone, des groupes alcoxy à 1 à 4 atomes de carbone, des atomes de fluor, de chlore et/ou de brome et/ou des groupes nitro, et D représente un radical biphényle, naphtyle ou phényle, lequel peut contenir, en tant que substituants non-solubilisants dans l'eau, des atomes de chlore et/ou de brome, des radicaux alkyle, alcoxy, aryle, aryloxy, nitro, cyano, trifluorométhyle, alkylcarbonyle, alkylsulfonyle, alcoxycarbonyle, arylcarbonyle, arylsulfonyle, alkylcarbonylamino, arylcarbonylamino, arylazo, sulfamoyle et/ou carbamoyle, les groupes alkyle et alcoxy étant ceux ayant 1 à 4 atomes de carbone, et les groupes aryle étant le groupe phényle pouvant être substitué par des atomes d'halogène, un alkyle en $C_1$-$C_4$ et/ou un alcoxy en $C_1$-$C_4$.

2. Procédé selon la revendication 1, caractérisé en ce qu'on utilise des colorants azoïques insolubles dans l'eau de formule générale (II)

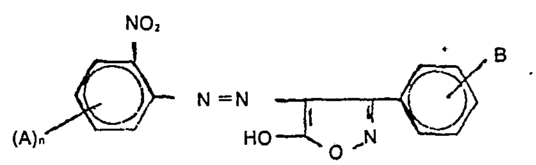

où A signifie un atome d'hydrogène, un groupe méthyle, méthoxy, éthoxy, β-hydroxyéthoxy ou un atome de chlore ou de brome, un groupe trifluorométhyle ou alcoxy carbonyle à alcoxy en $C_1$-$C_4$, et B signifie un atome d'hydrogène ou d'halogène ou un groupe nitro, méthyle ou methoxy, et n représente le nombre 0, 1 ou 2.